# EUROPÄISCHE PATENTANMELDUNG

(11) **EP 1 207 674 A2**
(43) Veröffentlichungstag der Anmeldung: **22.05.2002**
(21) Anmeldenummer: 01127676.3
(22) Anmeldetag: 20.11.2001
(51) Int. Cl.: H04M 3/51, H04M 7/00

(54) **Verfahren, EDV-System und Computerprogramm zur Verwaltung von eingehenden und ausgehenden Kommunikationsprozessen**

(30) Priorität: 20.11.2000 DE 10057530
(71) Anmelder: INCAS AG, 47807 Krefeld (DE)
(72) Erfinder: Janke, Roland, 47906 Kempen (DE)
(74) Vertreter: Cohausz & Florack

(57) **Zusammenfassung**

Die Erfindung betrifft ein Verfahren, EDV-System und Computerprogramm zur Verwaltung von eingehenden und ausgehenden Kommunikationsprozessen, insbesondere in einem Call Center, bei welchem eine Kommunikationssignalisierung eines A-Teilnehmers von einem Sever-Programm empfangen wird, und bei welchen durch den Server-Prozeß mit Hilfe der Kommunikationssignalisierung eine Routinginformation zu einem Client-Prozeß bei einem B-Teilnehmer ermittelt wird. Eine flexible, erweiterungsfähige und internetfähige Call Centersoftware und Call Center Telefonanlagen wird dadurch, daß durch den Server-Prozeß mit Hilfe der Routinginformation über eine paketvermittelte Verbindung der Client-Prozeß des B-Teilnehmers über die Kommunikationssignalisierung des A-Teilnehmers informiert wird, daß durch den Client-Prozeß mit Hilfe der Kommunikationssignalisierung des A-Teilnehmers Informationen über den A-Teilnehmer im wesentichen plattformunabhängig ermittelt werden, daß durch den Client-Prozeß eine Annahme oder eine Ablehnung der Kommunikation durch den B-Teilnehmer über eine im wesentlichen paketvermittelte Verbindung dem Server-Prozeß signalisiert wird, und das in Abhängigkeit von des Signalisierung des B-Teilnehmers die Kommunikation zwischen A-Teilnehmer und B-Teilnehmer durch den Server-Prozeß etabliert wird, zur Verfügung gestellt.

## Beschreibung

Die Erfindung betrifft ein Verfahren, EDV-System und Computerprogramm zur Verwaltung von eingehenden und ausgehenden Kommunikationsprozessen, insbesondere in einem Call Center, bei welchem eine Kommunikationssignalisierung eines A-Teilnehmers von einem Server-Programm empfangen wird, und bei welchen durch den Server-Prozeß mit Hilfe der Kommunikationssignalisierung eine Routinginformation zu einem Client-Prozeß bei einem B-Teilnehmer ermittelt wird. Ziel des Verfahrens ist es, eine plattformunabhänige Verwaltung von Kommunikationsprozessen in Call Centern unter Verwendung von Internet-Technologien zur Verfügung zu stellen.

In heutigen Call Centern werden Telefonanlagen und Call Center-Software mit erheblichem technischen Aufwand und unter enormen Kosten aufeinander zugeschnitten. Die Call Center-Software muß mit Mandaten-spezifischen Daten eingepflegt werden. Die Ausstattung der Mitarbeiter muß an die hohen Anforderungen der Call Center-Software angepaßt werden. Jede Arbeitsstation eines Mitarbeiters muß mit der Software ausgestattet werden. Dies macht Updates und Anpassungen an der Call Center-Software aufwendig und teuer.

Bei Verwendung von poprietären Lösungen für Call Center-Software und Telefonanlagen ist es zumeist notwendig, daß der Call Centermitarbeiter vor Ort im Call Center arbeitet. Da über den Tag eine ungleichmäßige Auslastung des Call Centers besteht, ist die Personalplanung schwierig. Es müssen stets die maximale Anzahl an Mitarbeitern vor Ort zur Verfügung stehen, so daß zu Spitzenzeiten auch alle Anfragen bearbeitet werden können. Problematisch daran ist, daß das Vorhalten von Mitarbeitern ein enormer Kostenfaktor ist.

Bekannte Call Center-Software unterstützt den Call Centermitarbeiter nur bei der Bearbeitung von Telefonieanfragen. Die Anforderungen von Call Centerkunden gehen jedoch heute über rein telefonische Auskünfte hinaus. Es müssen E-mail, Fax und WWW-Anfragen bearbeitet und beantwortet werden. So stellt zum Beispiel die Pflege einer Homepage eines Internet-Servers ein großes Aufgabenfeld für Call Centermitarbeiter dar. Problematisch an heutigen Call Center-Softwarelösungen ist, daß nur reine Telefonieanwendungen unterstützt werden.

Der Erfindung liegt daher das technische Problem zugrunde, flexible, erweiterungsfähige und internetfähige Call Center-Software und Call Center Telefonanlagen zur Verfügung zu stellen.

Das zuvor hergeleitete und aufgezeigte technische Problem wird erfindungsgemäß dadurch gelöst, daß durch den Server-Prozeß mit Hilfe der Routinginformation über eine paketvermittelte Verbindung der Client-Prozeß des B-Teilnehmers über die Kommunikationssignalisierung des A-Teilnehmers informiert wird, daß über den Client-Prozeß mit Hilfe der Kommunikationssignalisierung des A-Teilnehmers Informationen über den A-Teilnehmer im wesentichen plattformunabhängig ermittelt werden, daß durch den Client-Prozeß eine Annahme oder eine Ablehnung der Kommunikation durch den B-Teilnehmer über eine im wesentlichen paketvermittelte Verbindung dem Server-Prozeß signalisiert wird, und daß in Abhängigkeit von der Signalisierung des B-Teilnehmers die Kommunikation zwischen A-Teilnehmer und B-Teilnehmer durch den Server-Prozeß etabliert wird.

Das erfindungsgemäße Verfahren verarbeitet Kommunikationssignalisierungen mit Hilfe eines Server-Prozesses. Die Kommunkationssignalisierungen können eingehende Telefonieanfragen als auch eingehende E-mails, Faxe und Internetanfragen sein. Der Server-Prozeß ermittelt aus der Kommunikationssignalisierung eine Routinginformation zu einem Client-Prozeß bei einem B-Teilnehmer. Der B-Teilnehmer ist zumeist ein Call Centermitarbeiter, der jedoch nicht notwendiger Weise räumlich an das Call Center gebunden ist. Über eine paketvermittelte Verbindung, die durch das TCP/IP (Transport Control Protocol/Internet Protocol) gebildet sein kann, wird mit Hilfe der Routinginformation die Kommunikationssignalisierung des A-Teilnehmers an den Client-Prozeß des B-Teilnehmers übermittelt. Nachdem der Client-Prozeß des B-Teilnehmers die Kommunikationssignalisierung erhalten hat, ruft der Client-Prozeß des B-Teilnehmers seinerseits plattformunabhängig Informationen über den A-Teilnehmer ab. Dies geschieht derart, daß der Server-Prozeß dem Client-Prozeß des B-Teilnehmers plattformunabhängig Daten sendet und über eine offene Schnittstelle, beispielsweise ODBC, eine Datenbank nach Informationen über den A-Teilnehmer abfragt. Die in der Datenbank vorhandenen Informationen über den A-Teilnehmer werden dem B-Teilnehmer angezeigt. Dies kann beispielsweise über eine dynamisch erstellte WWW-Seite sein. Diese Seite wird bevorzugt über TCP/IP an den B-Teilnehmer übermittelt. Anhand der dem B-Teilnehmer übermittelten Informationen kann der B-Teilnehmer die Kommunikation mit dem A-Teilnehmer annehmen oder ablehnen. Die Annahme oder Ablehnung wird über eine im wesentlichen paketvermittelte Verbindung dem Server-Prozeß signalisiert. Diese paketvermittelte Verbindung kann wiederum eine TCP/IP Netzwerkverbindung sein. Der Server-Prozeß kennt den Standort des B-Teilnehmers und etabliert eine Verbindung zwischen dem rufenden A-Teilnehmer und dem gerufenen B-Teilnehmer. Diese Verbindung kann einerseits durch eine an den Server-Prozeß angebundene Telefonanlage (PBX) geschaltet werden. Vorteilhaft an dieser Lösung ist, daß der B-Teilnehmer nicht räumlich an das Call Center gebunden ist. Weiterhin vorteilhaft ist, daß die Datenbank von beliebig vielen Client-Prozessen über eine offene Schnittstelle abgefragt werden kann. Dies bedeutet eine zentrale Datenhaltung von Mandantenspezifischen Daten. Ein weiterer Vorteil besteht darin, daß der Client-Prozeß sowohl über ein firmeninternes Netzwerk, als auch über ein Weitverkehrsnetzwerk (WAN), wie auch das Internet mit dem Server-Prozeß kommunizieren kann. Durch die Verwendung von paketvermittelten Verbindungen, insbesondere TCP/IP Verwendungen, ist eine kostengünstige Kommunikation zwischen Client-Prozeß und Server-Prozeß gewährleistet.

Eine leitungsorientierte Verbindung, wie sie beispielsweise bei herkömmlichen Telefonieverbindungen zum Einsatz kommt, wird dadurch gewährleistet, daß durch den Server-Prozeß in Abhängigkeit der Signalisierung des B-Teilnehmers eine zumindest teilweise leitungsvermittelte Verbindung zwischen B-Teilnehmer und A-Teilnehmer etabliert wird. Hierbei vermittelt die an den Server-Prozeß angeschlossene Telefonanlage zwischen dem eingehenden Kommunikationswunsch des A-Teilnehmer und dem B-Teilnehmer. Der B-Teilnehmer kann hier beispielsweise über ein herkömmliches Telefon oder ein ISDN-Endgerät an die Telefonanlage angeschlossen sein. Dem Server-Prozeß ist die Nummer des an die Telefonanlage angeschlossenen Endgerätes des B-Teilnehmers auf Grund vorheriger Anmeldung des B-Teilnehmers am Server mit dieser Telefonnummer bekannt und ermöglicht somit eine Vermittlung der Verbindung durch die Telefonanlage.

Eine paketorientierte Verbindung wird dadurch ermöglicht, daß durch den Server-Prozeß, in Abhängigkeit von der Signalisierung des B-Teilnehmer, eine zumindest teilweise paketvermittelte Verbindung zwischen B-Teilnehmer und A-Teilnehmer etabliert wird. Bei der paketvermittelten Verbindung werden die Sprachinformationen in Datenpakete gestückelt und als Datenpakete zum Endgerät des jeweiligen Teilnehmers gesendet. Die paketvermittelte Verbindung zwischen B-Teilnehmer und A-Teilnehmer ermöglicht eine Sprach-Datenkonvergenz, was bedeutet, daß auf einer Verbindung sowohl Sprach- als Datenkommunikation möglich ist. Hierbei ist beispielsweise zu denken an eine gleichzeitige Sprachkommunikation zwischen dem B-Teilnehmer und dem A-Teilnehmer und einem Arbeiten an gemeinsam vom B-Teilnehmer und A-Teilnehmer genutzten Daten.

Ein weiterer Gegenstand der Erfindung ist ein Verfahren zur Verwaltung von ausgehenden Kommunikationsprozessen, insbesondere in einem Call Center, bei welchem bei einer Kommunikationsanfrage für eine Kommunikation zwischen einem B-Teilnehmer und einem A-Teilnehmer von einem Client-Prozeß Informationen über den A-Teilnehmer im wesentlichen plattformunabhängig ermittelt werden, bei welchem aus den ermittelten Informationen Routinginformationen zu dem A-Teilnehmer ermittelt werden, bei welchem die Routinginformationen durch den Client-Prozeß über eine im wesentlichen paketvermittelte Verbindung an einen Server-Prozeß übermittelt werden und bei welchen anhand der Routinginformationen eine Verbindung zwischen B-Teilnehmer und A-Teilnehmer etabliert wird. Um eine ausgehende Kommunikation zu ermöglichen, ruft der B-Teilnehmer durch den beim B-Teilnehmer vorhandenen Client-Prozeß Informationen über den A-Teilnehmer im wesentlichen plattformunabhängig auf. Dies kann beispielsweise über eine TCP/IP Verbindung mit einem Applikationsserver in Anbindung an eine Datenbank, die eine offene Datenbankschnittstelle, beispielsweise ODBC, aufweist, geschehen. Die Anfrage an die Datenbank wird durch den B-Teilnehmer, bzw. den Client-Prozeß, mittels einer Hypertext Transfer Protocol (HTTP) Anfrage an den Applikationsserver gestellt. Der B-Teilnehmer erhält daraufhin von der Datenbank über die TCP/IP Verbindung eine WWW-Seite mit den über den A-Teilnehmer vorhandenen Informationen präsentiert. Anhand der Informationen über den A-Teilnehmer kann der B-Teilnehmer die Art der Kommunikation mit dem A-Teilnehmer aussuchen. Dies kann eine Telefonie-Kommunikation, eine Fax-Kommunikation, eine E-mail-Kommunikation oder eine WWW-Kommunikation sein. Über das WWW ist z. B. auf eine Sprach-, oder Videokonferenz, eine Whiteboard Anwendung oder auch ein Chat möglich. Anhand der ausgewählten Kommunikationsweise werden die entsprechenden Routinginformationen durch den Client-Prozeß über eine im wesentlichen paketvermittelte Verbindung an einen Server-Prozeß übermittelt. Die im wesentlichen paketvermittelte Verbindung kann beispielsweise eine TCP/IP Verbindung sein.

Nach Erhalt der entsprechenden Routinginformationen initiiert der Server-Prozeß eine Verbindung zwischen dem B-Teilnehmer und dem A-Teilnehmer.

Die Verbindung zwischen B-Teilnehmer und dem A-Teilnehmer wird vorteilhaft dadurch etabliert, daß bei einer Kommunikationsanfrage durch den Server-Prozeß eine leitungsvermittelte Verbindung zu dem B-Teilnehmer etabliert wird, und daß bei einer erfolgreichen Verbindung mit dem B-Teilnehmer durch den Server-Prozeß mit Hilfe der Routinginformation eine zumindest teilweise leitungsvermittelte Verbindung mit dem A-Teilnehmer etabliert wird. Hierbei versucht der Server-Prozeß zunächst mit Hilfe der angeschlossenen Telefonanlage eine Verbindung mit dem B-Teilnehmer nach Erhalt der Routinginformationen vom Client-Prozeß des B-Teilnehmers zu etablieren. Dies gewährleistet, daß der B-Teilnehmer auch unter der dem Server-Prozeß bekannten Adresse erreichbar ist. Nach dem der B-Teilnehmer die Kommunikationsanfrage des Server-Prozesses bestätigt hat, wird die Verbindung mit dem A-Teilnehmer aufgebaut. Dadurch, daß durch den Server-Prozeß eine leitungsvermittelte Verbindung zu dem B-Teilnehmer etabliert wird, wird gewährleistet, daß die Qualität der Verbindung stets gleichbleibend ist.

Weiterhin ist bevorzugt, daß bei einer Kommunikationsanfrage durch den Server-Prozeß eine paketvermittelte Verbindung zu dem B-Teilnehmer etabliert wird, und daß bei einer erfolgreichen Verbindung mit dem B-Teilnehmer durch den Server-Prozeße mit Hilfe der Routinginformationen eine zumindest teilweise leitungvermittelte Verbindung mit dem A-Teilnehmer etabliert wird. Die Kommunikation über eine paketvermittelte Verbindung ermöglicht eine Sprach-Datenkonvergenz. Außerdem ist eine paketvermittelte Verbindung kostengünstig. Hierbei ist es denkbar, daß der B-Teilnehmer über das Internet mit dem Server-Prozeß, bzw. der Telefonanlage des Call Centers, verbunden ist. Über das Internet wird eine TCP/IP Verbindung mit dem B-Teilnehmer etabliert. Nachdem der B-Teilnehmer die Verbindung bestätigt hat, wird durch den Server-Prozeß mit Hilfe der Routinginformationen eine zumindest teilweise leitungsvermittelte Verbindung mit dem A-Teilnehmer etabliert.

In besonders vorteilhafter Weise läßt sich das erfindungsgemäße Verfahren anwenden, wenn der Client-Prozeß des B-Teilnehmers über eine paketvermittelte Verbindung vom Server-Prozeß zum B-Teilnehmer übermittelt wird. Nachdem sich der B-Teilnehmer gegenüber dem Server-Prozeß angemeldet hat, wird der Client-Prozeß über die paketvermittelte Verbindung zum B-Teilnehmer übermittelt. Auf dem B-Teilnehmer befindet sich eine Umgebung, in der der Client-Prozeß ausgeführt werden kann. Nach dem der Client-Prozeß zum B-Teilnehmer übermittelt worden ist, wird dieser beim B-Teilnehmer ausgeführt. Das hat den Vorteil, daß Veränderungen am Client-Prozeß nur auf der Serverseite vollzogen werden müssen. Jede Änderung des Client-Prozesses wird bei der Übermittlung des Client-Prozesses zum B-Teilnehmer für den B-Teilnehmer verfügbar. Dadurch entstehen erheblich geringere Wartungskosten als bei stationären Client-Prozessen. Die paketvermittelte Verbindung kann eine TCP/IP Verbindung sein.

In einer weiteren Ausgestaltungsmöglichkeit wird der Client-Prozeß des B-Teilnehmers über eine Wählverbindung vom Server-Prozeß zum B-Teilnehmer übermittelt. Hierbei wählt der B-Teilnehmer sich über ein Telefonnetz beim Server-Prozeß ein. Nach erfolgreichem Verbindungsaufbau wird der Client-Prozeß zum B-Teilnehmer übertragen.

Um einen Mißbrauch der Software zu verhindern, wird vorgeschlagen, daß eine gesicherte Authentisierung des B-Teilnehmers mit Hilfe des zum B-Teilnehmers übermittelten Client-Prozeß gewährleistet wird. Der zum B-Teilnehmer übermittelte Client-Prozeß unterstützt Verschlüsselungsprotokolle, die eine weitestgehend abhörsichere Kommunikation zwischen Client-Prozeß und Server-Prozeß ermöglichen. Der B-Teilnehmer gibt mit Hilfe des Client-Prozesses seinen Benutzernamen und sein Paßwort ein, welche verschlüsselt an den Server-Prozeß übermittelt werden. Nach einer erfolgreichen Authentisierung des B-Teilnehmers, wird dieser für Kommunikationsanfragen freigeschaltet.

Der Server-Prozeß speichert Routinginformationen für jeden angemeldeten B-Teilnehmer. Diese Routinginformationen bestehen einerseits aus der Adresse des dem B-Teilnehmer zugeordneten Client-Prozesses sowie einer Adresse des dem B-Teilnehmer zugeordneten Endgerätes. Die eindeutige Adresse des Client-Prozesses kann beispielsweise eine Internet-Protokolladresse (IP-Adresse) sein. Durch diese IP-Adresse kann der Server-Prozeß Kommunikationsanfragen an den Client-Prozeß weiterleiten. Verändern sich die Routinginformationen des B-Teilnehmers, was beispielsweise durch ein Wechseln des dem B-Teilnehmer zugeordneten Endgerätes oder aber auch ein Wechseln der Arbeitsstation des B-Teilnehmers erfolgen kann, wird die geänderte Routinginformation im Server-Prozeß angepaßt.

Ein großes Anwendungsspektrum ergibt sich daraus, daß der Client-Prozeß als im wesentlichen plattformunabhängiger Prozeß beim B-Teilnehmer ausgeführt wird. Es ist somit weitestgehend unerheblich, welches Endgerät der B-Teilnehmer betreibt. Auf dem Endgerät des B-Teilnehmers, beispielsweise einem Windows-PC, muß nur eine Laufzeitumgebung für den Client-Prozeß vorhanden sein. Diese Laufzeitumgebung kann aber auch ein Computer mit einem anderen Betriebssystem als auch jedes andere prozessorgestützte Endgerät aufweisen.

In besonders einfacher Weise läßt sich das erfindungsgemäße Verfahren ausgestalten, in dem der Client-Prozeß als Applet oder Applikation, insbesondere in Java, in einer plattformunabhängigen Laufzeitumgebung, insbesondere einer Java-Virtual-Machine, die beim B-Teilnehmer ausgeführt wird. Das Applet bzw. die Applikation beinhaltet die Funktionen des Client-Prozesses und ist in jeder plattformunabhängigen Laufzeitumgebung sowohl innerhalb des Client-Betriebssystems direkt, als auch innerhalb eines Internet-Browsers ausführbar. Ein Java Applet kann vom Server-Prozeß zum B-Teilnehmer übermittelt werden und nach der Übermittlung beim B-Teilnehmer in einer Java-Virtual-Machine ausgeführt werden. Bevorzugt wird durch die Verwendung von Java eine Plattformunabhängigkeit des Client-Prozesses erreicht.

Es wird vorgeschlagen, daß die Information über den A-Teilnehmer über eine paketvermittelte Verbindung ermittelt werden. Der Client-Prozess fragt über diese paketvermittelte Verbindung die Datenbank ab. Die paketvermittelte Verbindung kann eine TCP/IP Verbindung sein. Die Datenbank ist an das TCP/IP Netz angebunden. Über eine Datenbankschnittstelle, beispielsweise ODBC, ist der Client-Prozess via Applikationsserver in der Lage, die Datenbank abzufragen. Mit Hilfe einer HTTP Anfrage werden die benötigten Daten aus der Datenbank ermittelt. Die ermittelten Daten werden durch die Datenbank aufbereitet und können als WWW Seite über die paketvermittelte Verbindung zum Client-Prozess übermittelt werden. Dem B-Teilnehmer werden die so ermittelten Informationen über den A-Teilnehmer mit Hilfe der WWW Seiten präsentiert. Der Benutzer muß dazu lediglich einen gängigen Internet-Browser ausführen.

In besonders vorteilhafter Weise läßt sich das erfindungsgemäß Verfahren ausgestalten, in dem die Sprachverbindung zwischen A-Teilnehmer und B-Teilnehmer durch eine zumindest teilweise paketvermittelte Verbindung etabliert wird. Serverseitig ist neben dem Server-Prozess auf den selben System oder als dedizierte Plattform ein Voice-Over-IP Gateway vorhanden. Dieses Gateway wandelt die eingehende Sprachkommunikation der Telefonanlage in Datenpakete um und übermittelt sie in das TCP/IP Netz. Auf der Seite des B-Teilnehmers befindet sich ebenfalls ein Voice-Over-IP Gateway, welches die an den B-Teilnehmer gerichteten Datenpakete zurück in Sprachkommunikation wandelt. Dieses Gateway kann sowohl Hard- als auch Software basierend sein. Der B-Teilnehmer kann mit Hilfe eines Hardware basierenden Voice-Over-IP Gateways herkömmliche Telefongeräte zur Kommunikation nutzen. Weiterhin ist möglich, daß der B-Teilnehmer zur Kommunikation ein physikalisches IP-Telefon nutzt. Dieses IP- Telefon wandelt automatisch die Datenpakete in Sprachkommunikation und vice versa. Durch Verwendung einer Voice-Over-IP Verbindung ist es möglich, daß der B-Teilnehmer lediglich über eine Internetverbindung mit dem Server-Prozess verbunden ist. Über die Internetverbindung wird sowohl die Kommunikation zwischen Client-Prozess und Server-Prozess, welche eine Datenkommunikation ist, als auch die Kommunikation zwischen A-Teilnehmer und B-Teilnehmer, welche eine Sprachkommunikation sein kann, abgewickelt.

Um eine gleichbleibende Sprachqualität bei einer Sprachkommunikation über Voice-Over-IP zu gewährleisten, wird vorgeschlagen, daß die Qualität der paketvermittelten Verbindung durch ein die Verbindungsqualität sicherndes Protokoll gewährleistet wird. Ein solches Verbindungsqualität sicherndes Protokoll ist das H.323 Protokoll und Nachfolge-Protokolle, beispielsweise H. 450 und in IP V6. Dieses Protokoll gewährleistet Dienstqualität (Quality of Service).

Um die einzelnen Kommunikationsprozesse überwachen zu können und Aussagen über Auslastung des Call Centers treffen zu können, sowie zur Erstellung von Rechnungen und Statistiken wird vorgeschlagen, daß die Kommunikationsprozesse mit Hilfe des Server-Prozesses aufgezeichnet werden.

Das oben aufgezeigte technische Problem wird auch durch ein EDV-System zur Verwirklichung eines erfindungsgemäßen Verfahrens gemäß Anspruch 1 bis 15 gelöst. Das EDV-System umfaßt dabei sowohl eine Telefonanlage als auch einen Server-Prozess und einen Client-Prozess. Hierbei ist eine räumliche Trennung zwischen Telefonanlage, Server-Prozess und Client-Prozess möglich. Die Verbindung zwischen den einzelnen Bestandteilen des EDV-Systems wird durch ein eine Kommunikation ermöglichendes Netz hergestellt. Dies kann beispielsweise ein Lokal Area Network (LAN) oder ein Weitverkehrsnetz (WAN) oder auch das Internet sein.

Darüber hinaus wird das oben aufgezeigte technische Problem auch durch ein Computer-Programm gemäß Anspruch 18 mit Programmbefehlen für ein EDV-System zur Verwirklichung des erfindungsgemäßen Verfahrens gelöst. Dieses Computerprogramm kann dabei auch auf einem maschinenlesbaren Medium gespeichert sein, als auch in einem Computer, der an ein Netzwerk, beispielsweise ein LAN oder das Internet angeschlossen ist, gespeichert sein.

Im folgenden wird das erfindungsgemäße Verfahren anhand einer Ausführungsbeispiele zeigenden Zeichnung näher erläutert. In der Zeichnung zeigen
- Fig. 1: den schematischen Ablauf des erfindungsgemäßen Verfahrens,
- Fig. 2: die Architektur des erfindungsgemäßen Verfahrens,

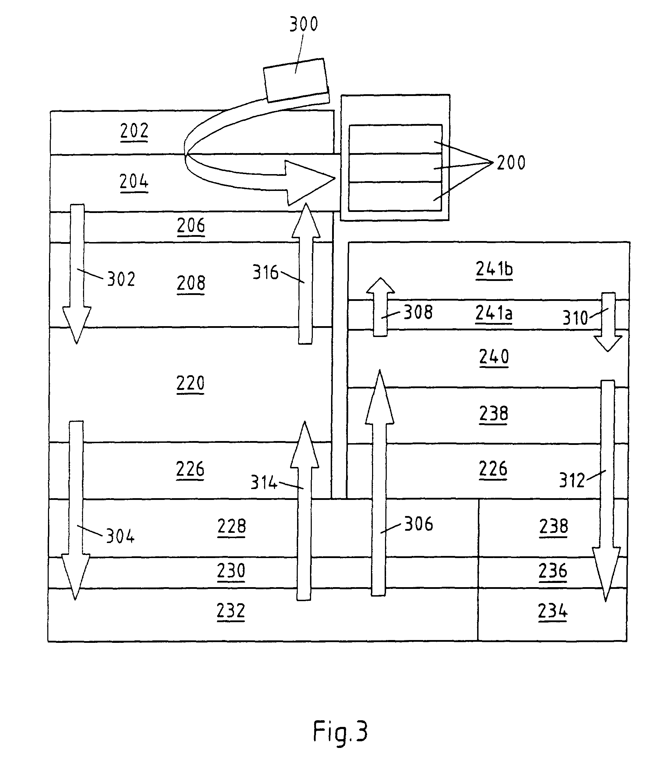

- Fig. 3: den Ablauf eines eingehenden Kommunikationswunsches,
- Fig. 4: den Ablauf eines ausgehenden Kommunikationswunsches,
- Fig. 5: die Anmeldung eines Client-Prozesses,
- Fig. 6: eine Voice-Over-IP Architektur und
- Fig. 7: eine weitere Voice-Over-IP Architektur.

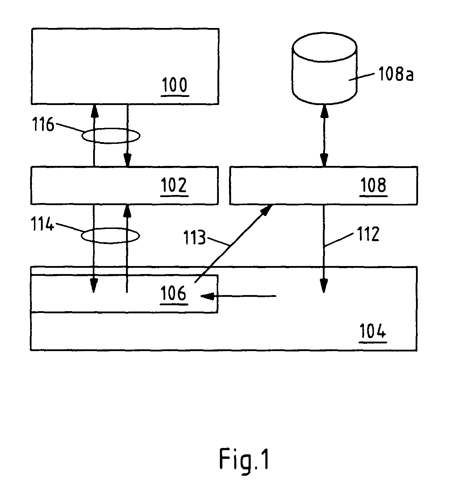

In Fig. 1 zeigt der Block 100 eine Vielzahl von Kommunikationssports. Diese Kommunikationssports 100 stellen den Server-Prozess 102 eine Vielzahl von Kommunikationsprozessen, wie Telefonie, Fax und Internetverbindungen zur Verfügung. Der Server-Prozess 102 kommuniziert mit dem Client-Prozess 106, der in einem Web-Browser 104 bei einem Nutzer installiert ist. Der Client-Prozess 106 kommuniziert seinerseits mit einer vor eine Datenbank 108a gestellten Applikationsserverprozess 108. Der Applikationsserverprozess 108 kommuniziert mit der Datenbank 108a über eine ODBC Datenbankschnittstelle. Über die Kommunikationsschnittstelle 116 werden eingehende Kommunikationswünsche vom Server-Prozess 102 über eine TCP/IP Verbindung 114 an den Client-Prozess 106 übermittelt. Der Client-Prozess 106 fragt über den Applikationsserverprozess 108 die Datenbank 108a mit Hilfe einer HTTP Abfrage 113 nach Informationen über den rufenden Kommunikationspartner ab. Die Datenbank 108a liefert dem Web-Browser 104 des Nutzers WWW Seiten über eine Internetverbindung 112. Anhand der Informationen auf den WWW Seiten entscheidet der Nutzer über eine Annahme oder Ablehnung des Kommunikationswunsches. Diese Annahme oder Ablehnung wird durch den Client-Prozess 106 über die TCP/IP Verbindung 114 dem Server-Prozess 102 mitgeteilt. Der Server-Prozess 102 stellt über die Kommunikationsschnittstelle 116 die Verbindung zwischen dem Benutzer und dem rufenden Teilnehmer her. Diese Verbindung ist in Fig. 1 nicht zu erkennen. Sie wird nicht durch den Server-Prozess direkt geleitet, sondern nur durch den Server-Prozess 102 initiiert.

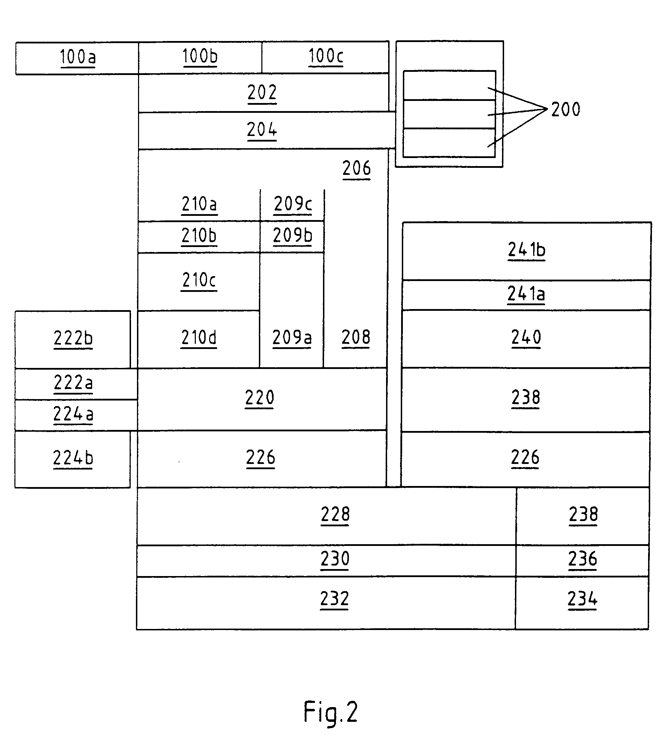

In Fig. 2 ist die Architektur eines erfindungsgemäßen EDV-Systems dargestellt. Das EDV-System weist Verbindungen zu verschiedenen Kommunikationsmedien 100a, b und c auf. Das Kommunikationsmedium 100a stellt eine Verbindung mit einem Mobilfunknetz her. Das Kommunikationsmedium 100b stellt eine Verbindung mit einem ISDN her und das Kommunikationsmedium 100c stellt eine Verbindung mit einem Analogtelefon her.

Diese Kommunikationsmedien 100a, b und c sind über ein öffentliches Fernsprechnetz 202 mit einer Telefonanlage 204 verbunden. Die Telefonanlage 204 ist räumlich im Call Center angeordnet. Das Call Center weist eine Vielzahl von Kommunikationsendgeräten 200 auf, die ihrerseits an die Telefonanlage 204 angeschlossen sind. Die Telefonanlage 204 stellt, gesteuert durch die Schnittstelle 206, Verbindungen zwischen den Kommunikationsmedien 100a, b und c und der Vielzahl der Telefone 200 her.

Die Schnittstelle 206 weist im einfachsten Fall eine Telephone Application Programmable Interface (TAPI) 208 auf. Über dieses TAPI 208 ist die Schnittstelle 206 bedienbar. Die Schnittstelle 206 ist weiterhin über einen TAPI Server 209c, ein TCP/IP Netz 209b und einen TAPI Service Provider 209a steuerbar. Des weiteren kann die Schnittstelle 206 über eine Computer Supported Telephone Applications (CSTA) Schnittstelle 210a gesteuert werden. Die CSTA Schnittstelle 210a ist über ein TCP/IP Netz 210b mit einem weiteren zwischengelagerten Prozess (Middleware) 210c verbunden. Dieser stellt dem Server-Prozess 220 eine TAPI Schnittstelle 210d zur Verfügung. Das bedeutet, daß der Server-Prozess 220 lediglich mit Hilfe von TAPI Befehlen die Schnittstelle 206 steuern kann. Grundsätzlich sind aber auch weitere Schnittstellen zur Computer Telephony-Integration denkbar, wie TSAPI oder JTAPI und andere.

Der Server-Prozess 220 ist über eine Datenbankschnittstelle 222a mit einer Benutzerdatenbank 222b verbunden. In der Benutzerdatenbank 222b sind Informationen über die Nutzer des Server-Prozesses abgelegt. Dies sind üblicherweise die Mitarbeiter des Call Centers. Hierin befinden sich Informationen über die Authentifikation der Mitarbeiter, über Gruppenzugehörigkeiten der Mitarbeiter sowie weitere Informationen.

Der Server-Prozess 220 ist weiterhin über die Datenbankschnittstelle 224a mit einer Log-Datei 224b verbunden. In der Log-Datei 224b werden alle Kommunikationsprozesse gespeichert. Sämtliche Kommunikation wird registriert und verwaltet. Dies gilt für eingehende, ausgehende sowie interne Kommunikation. Durch das Speichern der Kommunikationsprozesse in der Log-Datei 224b ist eine Auswertung der Kommunikation statistisch möglich. Somit können Resourcen des Call Centers gut geplant werden.

Der Server-Prozess 220 ist über ein TCP/IP Netzwerk 226 mit einer Java Virtual Machine 228 oder einer anderen weitestgehend plattformunabhängigen Laufzeitumgebung verbunden. Die Java Virtual Machine 228 wird auf dem Rechner des Benutzers des Call Centers im Web-Browser ausgeführt. In einem Web-Browser des Benutzers können verschiedene Rahmen 230 (sog. Frames) angezeigt werden. Diese Rahmen 230 können mit unterschiedlichen Inhalten gefüllt sein. Ein Rahmen 230 führt den Client-Prozess 232 aus.

Der Client-Prozess 232 greift über das TCP/IP Netzwerk 226 auf eine Datenbank 241b zu. Die Datenbank 241b ist mit der Schnittstelle 241a über einen HTTP Server 238 an das TCP/IP Netzwerk 226 angeschlossen. Die Informationen in der Datenbank 241b werden mit Hilfe von Active-Server-Pages (ASP) 240 oder PHP oder andere Verfahren zur Erzeugung dynamischer Web-Seiten so aufbereitet, daß diese in einem Rahmen 236 als HTML Seite 234 beim Benutzer dargestellt werden können. Die Funktionsweise des erfindungsgemäßen Verfahrens ist in den folgenden Figuren näher erläutert.

Ein eingehender Kommunikationswunsch 300 wird durch die Telefonanlage 204 in dem Schritt 302 an den Server-Prozess 220 weitergeleitet. Der Server-Prozess 220 weitergeleitet. Der Server-Prozess 220 übermittelt die Kommunikationsanfrage in dem Schritt 304 an den Client-Prozess 232 nachdem die Routinginformationen zum Client-Prozess 232 ermittelt worden sind (nicht dargestellt).

Der Client-Prozess 232 seinerseits ruft in dem Schritt 306 eine WWW Seite auf. Die auf der WWW Seite dargestellten aktiven Elemente ergeben sich aus Informationen, die in der Datenbank 241b enthalten sind und in den Schritten 308, 310 abgefragt und 240 verarbeitet werden.

Die so erstellte Seite wird in dem Schritt 312 in einem Rahmen 236 als HTML Seite 234 dem Benutzer angezeigt. Entsprechend der Informationen kann der Benutzer nun die Kommunikation annehmen oder ablehnen. Eine Annahme der Kommunikation wird durch den Client-Prozess 232 an den Server-Prozess 220 in dem Schritt 314 mitgeteilt. Der Server-Prozess 220 etabliert durch eine Mitteilung an die Telefonanlage 204 die Kommunikation zwischen dem Endgerät des Benutzers 200 und der eingehenden Kommunikation 300.

Dies geschieht durch Ausnutzen der Routinginformationen, die eine Vermittlung zwischen dem eingehenden Kommunikationswunsch und dem Endgerät 200 des Call Center Mitarbeiters ermöglichen. Die Kommunikation als solche wird mit Hilfe der Endgeräte des Rufenden und des Call Center-Mitarbeiters durchgeführt. Das Endgerät 200 kann dabei direkt an einer Telefonanlage 204 angebunden sein oder über ein Leitungs- oder Paketvermittelndes Verfahren angesteuert werden.

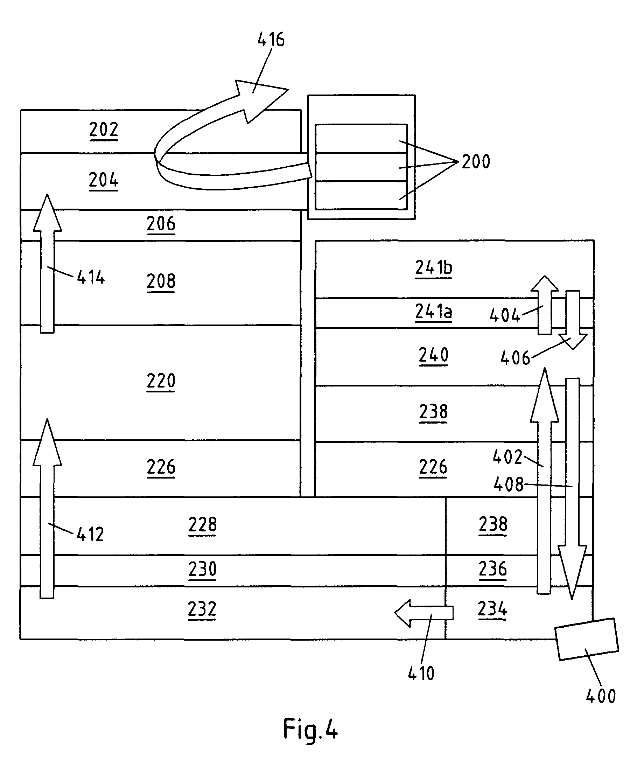

In Fig. 4 ist der Aufbau einer ausgehenden Kommunikation näher erläutert. Ein Kommunikationswunsch 400 wird durch einen Benutzer, z. B. Call Center-Mitarbeiter, durch die Eingabe einer Identifikation eines gewünschten Teilnehmers initiiert. Diese Identifikation kann aus einer Telefonnummer des gewünschten Teilnehmers bestehen.

Die Telefonnummer wird in dem Schritt 402 an die aktive WWW Seite 240 geleitet. Anhand der Identifikation wird die Datenbank in dem Schritt 404 abgefragt und Informationen zu dem gewünschten Teilnehmer werden in dem Schritt 406 den aktiven WWW Seiten 240 zugeleitet. Die so erstellten WWW Seiten 240 werden in einem Rahmen 236 im Schritt 408 beim Benutzer dargestellt.

Wünscht der Benutzer eine Kommunikation so wird dies in dem Schritt 410 dem Client-Prozess 232 mitgeteilt. Der Client-Prozess 232 richtet den Kommunikationswunsch an den Server-Prozess 220 in dem Schritt 412 über das TCP/IP Netzwerk 226. Über die CTI Schnittstelle 208 steuert der Server-Prozess 220 die Telefonanlage 204 in dem Schritt 414. Zunächst wird eine Verbindung mit dem Endgerät 200 des Benutzers aufgebaut. Das Endgerät 200 kann dabei direkt an einer Telefonanlage 204 angebunden sein oder über ein leitungs- oder paketvermitteltes Verfahren angesteuert werden. Nachdem der Benutzer den Kommunikationswunsch angenommen hat, wird eine ausgehende Verbindung über das öffentliche Fernsprechnetz 202 in dem Schritt 416 etabliert, wonach eine Kommunikation zwischen Benutzer und Gerufenen möglich ist.

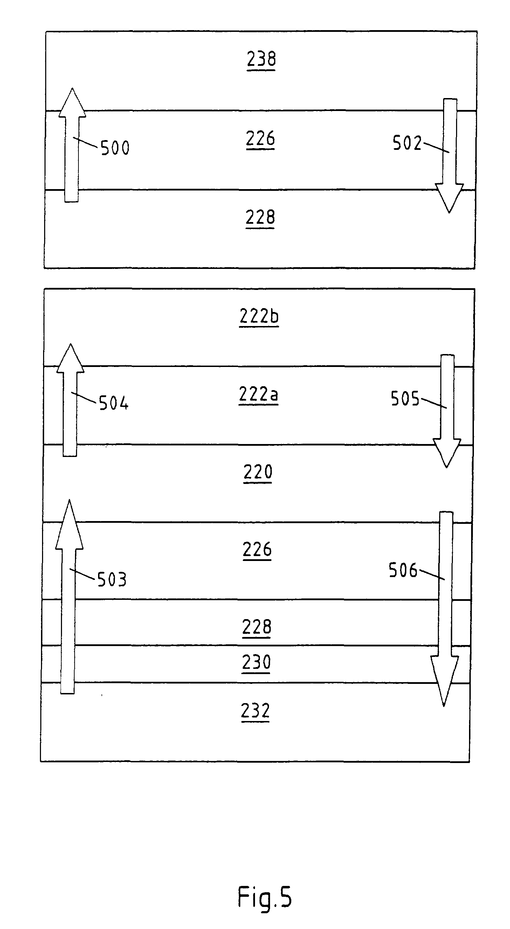

In Fig. 5 ist die Anmeldung eines Benutzers am Server-Prozess 220 dargestellt. Der Benutzer betreibt eine Java Virtual Machine 228 in einem das HTTP Protokoll unterstützenden Browser. In dem Schritt 500 wird ein Web-Server 238 aufgefordert, ein Java Applet oder eine andere Applikation an die Java Virtual Machine 228 oder eine andere weitestgehend plattformunabhängige Laufzeitumgebung in dem Schritt 502 zu übermitteln. Die Applikation wird als Client-Prozess 232 beim Benutzer des Call Centers ausgeführt.

In dem Schritt 503 meldet sich der Benutzer mit Hilfe des Applets 232 beim Server-Prozess 220a an, indem er seine Authentifikation an den Server-Prozess 220 übermittelt. Über die Schnittstelle 222a wird die Datenbank 222b in dem Schritt 504 nach der Authentifikation des Benutzers abgefragt. Ist die Authentifikation des Benutzers gültig, so wird dies dem Server-Prozess 220 in dem Schritt 505 mitgeteilt.

Der Server-Prozess 220 initiiert darauf hin das Speichern von dem Benutzer zugeordneten Information (nicht dargestellt). Außerdem wird dem Benutzer in dem Schritt 506 mitgeteilt, daß er sich am Server-Prozess 220 angemeldet hat. Ihm werden entsprechend seines Benutzerprofils benutzerspezifische Daten im Client-Prozess 232 angezeigt.

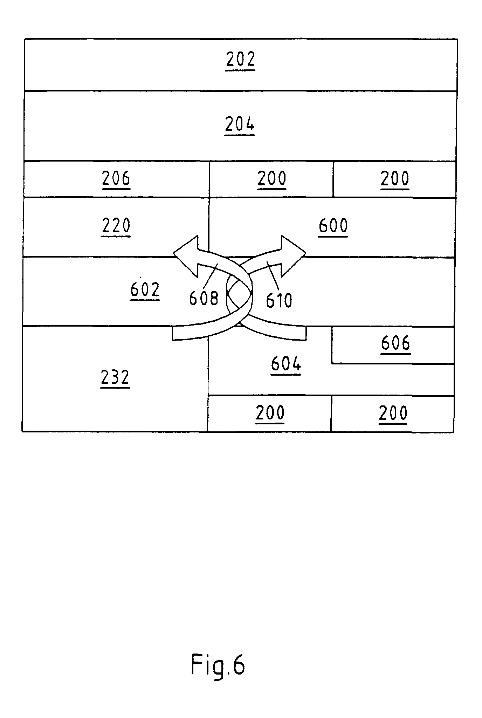

Eine mögliche Integration von Voice-Over-IP ist in Fig. 6 dargestellt. Das öffentliche Fernsprechnetz 202 ist an die Call Center Telefonanlage 204 angebunden. Die Call Center Telefonanlage 204 weist eine Schnittstelle 206 auf, die mit dem Server-Prozess 220 verbunden ist.

Weiterhin ist die Telefonanlage 204 mit einem Voice-Over-IP Gateway 600 verbunden. Das Voice-Over-IP Gateway 600 ermöglicht die Umwandlung von kontinuierlichen Sprachdaten in einzelne Datenpakete. Über ein TCP/IP Netzwerk 602, das mit Quality of Service Funktionalitäten ausgestattet ist, ist der Server-Prozess 220 sowie das Voice-Over-IP Gateway 600 mit dem Benutzer verbunden. Die Gewährleistung von Quality of Service durch das TCP/IP Netz ist notwendig, um eine akzeptable Sprachqualität bei einer Übermittlung von Sprache über ein paketvermitteltes Netz zu gewährleisten.

Der Client-Prozess 232 kommuniziert über das TCP/IP Netz 602 mit dem Server-Prozess 220 zur Steuerung der Kommunikation in dem Schritt 608. Die Kommunikation selber wird über das TCP/IP Netz 602 zwischen dem Voice-Over-IP Gateway 600, das an der Telefonanlage 204 angeordnet ist, und dem Voice-Over-IP Gateway 604, das beim Benutzer angeordnet ist, in dem Schritt 610 abgewickelt. Der Benutzer kann einerseits über das Voice-Over-IP Gateway 604 mit herkömmlichen Telefonieendgeräten 200 kommunizieren. Andererseits ist es auch möglich, daß der Benutzer ein Voice-Over-IP Telefon 606 besitzt, welches die Sprachdaten direkt in Datenpakete für ein paketvermitteltes Netz 602 umwandelt. Durch die Verwendung des TCP/IP Netzes 602 kann sowohl die Steuerung des Server-Prozesses als auch die Kommunikation zwischen dem rufenden und dem gerufenen Teilnehmer über nur ein Netz 602 abgewickelt werden.

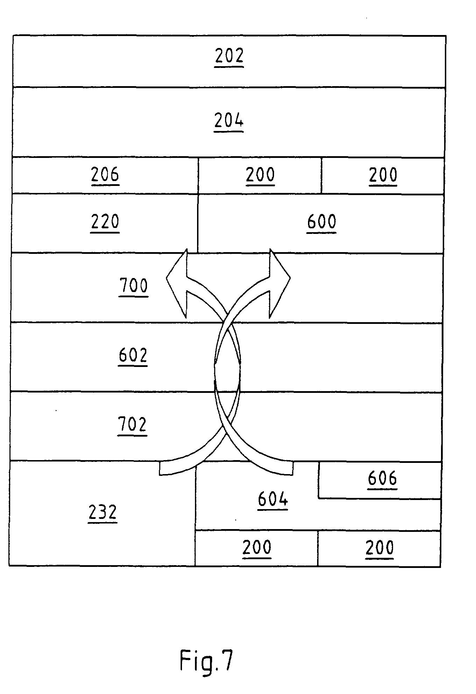

In Fig. 6 ist die Voice-Over-IP Kommunikation in einem firmeninternen Datennetz dargestellt. Es ist auch möglich, daß die Voice-Over-IP Kommunikation aus dem Firmennetz heraus über eine Telefonverbindung, die Träger einer paketvermittelten Verbindung ist, durchgeführt wird. Dies ist in Fig. 7 dargestellt.

Zusätzlich zu dem TCP/IP Netz 602 ist in Fig. 7 ein IP-Router 700 und 702 dargestellt. Der einzige Unterschied zwischen dem in Fig. 6 dargestellten Verfahren und dem in Fig. 7 dargestellten Verfahren besteht darin, daß die IP-Router 700 und 702 die Datenpakete in das Weitverkehrsnetz (WAN) einspeisen und aus dem Weitverkehrsnetz (WAN) ausschleusen.

Der Benutzer des Call Centers kann sich mit Hilfe des IP-Routers 702 am Server-Prozess 220 des Call Centers anmelden. Über das Voice-Over-IP Gateway 600 wird ein beim Call Center eingehender Kommunikationswunsch von der Telefonanlage 204 über das TCP/IP Netz 602 an das Voice-Over-IP Gateway 604 des Benutzers weitergeleitet. Neben der Sprachkommunikation über Voice-Over-IP kann zusätzlich eine Steuerung des Server-Prozesses 202 durch den Client-Prozess 232 und umgekehrt stattfinden. Dies bietet den Vorteil, daß nur eine einzige Wählverbindung für sowohl Sprach- als auch Datenkommunikation benötigt wird.

Das dargestellte Verfahren erspart die Installation von spezieller Software, da ein Java Applet oder eine andere Applikation in einer weitestgehend plattformunabhängigen Laufzeitumgebung auf den Browser oder einer anderen Laufzeitumgebung des Benutzers bei jeder Benutzung neu geladen wird. Die Integration von Home Office Arbeitsplätzen wird durch das dargestellte Verfahren ermöglicht und der Zugriff auf den Server-Prozess wird durch den Client-Prozess erheblich vereinfacht.

## Patentansprüche

1. Verfahren zur Verwaltung von eingehenden Kommunikationsprozessen, insbesondere in einem Call Center,
- bei welchem eine Kommunikationssignalisierung (300) eines A-Teilnehmers von einem Server-Prozeß (220) empfangen wird,
- und bei welchem durch den Server-Prozeß (220) mit Hilfe der Kommunikationssignalisierung (300) eine Routinginformation zu einem Client-Prozeß (232) bei einem B-Teilnehmer ermittelt wird,
**dadurch gekennzeichnet,**
- **daß** durch den Server-Prozeß (220) mit Hilfe der Routinginformation über eine paketvermittelte Verbindung (226) der Client-Prozeß (232) des B-Teilnehmers über die Kommunikationssignalisierung (300) des A-Teilnehmers informiert wird,
- **daß** über den Client-Prozeß (232) mit Hilfe der Kommunikationssignalisierung (300) des A-Teilnehmers Informationen über den A-Teilnehmer im wesentlichen plattformunabhängig ermittelt werden (306, 312),
- **daß** durch den Client-Prozeß (232) eine Annahme oder Ablehnung der Kommunikation durch den B-Teilnehmer über eine im wesentlichen paketvermittelte Verbindung (226) dem Server-Prozeß (220) signalisiert wird (314), und
- **daß** in Abhängigkeit von der Signalisierung des B-Teilnehmers die Kommunikation zwischen A-Teilnehmer und B-Teilnehmer durch den Server-Prozeß (220) etabliert wird.

2. Verfahren nach Anspruch 1,
**dadurch gekennzeichnet,**
**daß** durch den Server-Prozeß (220) in Abhängigkeit der Signalisierung (314) des B-Teilnehmers eine zumindest teilweise leitungsvermittelte Verbindung zwischen B-Teilnehmer und A-Teilnehmer etabliert wird.

3. Verfahren nach einem der Ansprüche 1 bis 2,
**dadurch gekennzeichnet,**
**daß** durch den Server-Prozeß (220) in Abhängigkeit von der Signalisierung (314) des B-Teilnehmers eine zumindest teilweise paketvermittelte Verbindung zwischen B-Teilnehmer und A-Teilnehmer etabliert wird.

4. Verfahren zur Verwaltung von ausgehenden Kommunikationsprozessen, insbesondere in einem Call Center,
- bei welchem bei einer Kommunikationsanfrage (400) für eine Kommunikation zwischen einem B-Teilnehmer und einem A-Teilnehmer von einem Client-Prozeß (234) Informationen über den A-Teilnehmer im wesentlichen plattformunabhängig ermittelt werden (402, 408),
- bei welchem aus den ermittelten Informationen Routinginformationen zu dem A-Teilnehmer ermittelt werden,
- bei welchem die Routinginformationen durch den Client-Prozeß (232) über eine im wesentlichen paketvermittelte Verbindung (226) an einen Server-Prozeß (220) übermittelt werden und
- bei welchem anhand der Routinginformationen eine Verbindung (416) zwischen B-Teilnehmer und A-Teilnehmer etabliert wird.

5. Verfahren nach Anspruch 4,
**dadurch gekennzeichnet,**
**daß** bei einer Kommunikationsanfrage durch den Server-Prozeß (220) eine leitungsvermittelte Verbindung zu dem B-Teilnehmer etabliert wird, und daß bei einer erfolgreichen Verbindung mit dem B-Teilnehmer durch den Server-Prozeß (220) mit Hilfe der Routinginformationen eine zumindest teilweise leitungsvermittelte Verbindung mit dem A-Teilnehmer etabliert wird.

6. Verfahren nach Anspruch 4,
**dadurch gekennzeichnet,**
**daß** bei einer Kommunikationsanfrage durch den Server-Prozeß (220) eine paketvermittelte Verbindung zu dem B-Teilnehmer etabliert wird, und daß bei einer erfolgreichen Verbindung mit dem B-Teilnehmer durch den Server-Prozeß (220) mit Hilfe der Routinginformationen eine zumindest teilweise leitungsvermittelte Verbindung mit dem A-Teilnehmer etabliert wird.

7. Verfahren nach einem der Ansprüche 1 bis 6,
**dadurch gekennzeichnet,**
**daß** der Client-Prozeß (232) des B-Teilnehmers über eine paketvermittelte Verbindung (226) vom Server-Prozeß (220) zum B-Teilnehmer übermittelt wird.

8. Verfahren nach einem der Ansprüche 1 bis 7,
**dadurch gekennzeichnet,**
**daß** der Client-Prozeß (232) des B-Teilnehmers über eine Wählverbindung vom Server-Prozeß (220) zum B-Teilnehmer übermittelt wird.

9. Verfahren nach einem der Ansprüche 1 bis 8,
**dadurch gekennzeichnet,**
**daß** eine gesicherte Authentisierung (503,504,500,502,505,506) des B-Teilnehmers mit Hilfe des zum B-Teilnehmer übermittelten Client-Prozeß (232) gewährleistet wird.

10. Verfahren nach einem der Ansprüche 1 bis 9,
**dadurch gekennzeichnet,**
**daß** dem Client-Prozeß (232) eine eindeutige Adresse zugeordnet wird und daß die Routinginformation des B-Teilnehmers dynamisch an die eindeutige Adresse des Client-Prozesses (232) angepaßt wird.

11. Verfahren nach einem der Ansprüche 1 bis 10,
**dadurch gekennzeichnet,**
**daß** der Client-Prozeß (232) als im wesentlichen plattformunabhängiger Prozeß beim B-Teilnehmer ausgeführt wird.

12. Verfahren nach einem der Ansprüche 1 bis 11,
**dadurch gekennzeichnet,**
**daß** der Client-Prozeß (232) als Applet oder Applikation in einer plattformunabhängigen Laufzeitumgebung (228) beim B-Teilnehmer ausgeführt wird.

13. Verfahren nach einem der Ansprüche 1 bis 12,
**dadurch gekennzeichnet,**
**daß** die Informationen über den A-Teilnehmer über eine paketvermittelte (226) Verbindung ermittelt werden.

14. Verfahren nach einem der Ansprüche 1 bis 13,
**dadurch gekennzeichnet,**
**daß** die Sprach-Verbindung zwischen A-Teilnehmer und B-Teilnehmer zumindest teilweise durch eine zumindest teilweise paketvermittelte Verbindung etabliert wird.

15. Verfahren nach einem der Ansprüche 1 bis 14,
**dadurch gekennzeichnet,**
**daß** die Qualität der paketvermittelten Verbindung durch ein Verbindungsqualität sicherndes Protokoll gewährleistet wird.

16. Verfahren nach einem der Ansprüche 1 bis 15,
**dadurch gekennzeichnet,**
**daß** die Kommunikationsprozesse mit Hilfe des Server-Prozesses (220) aufgezeichnet werden.

17. EDV-System zur Verwirklichung eins Verfahrens nach einem der Ansprüche 1 bis 16.

18. Computer-Programm mit Programmbefehlen für ein EDV-System zur Verwirklichung eines Verfahrens nach einem der Ansprüche 1 bis 16.

19. Computer-Programm nach Anspruch 18, gespeichert auf einem maschinenlesbaren Medium.
